(19) **Europäisches Patentamt / European Patent Office / Office européen des brevets**

(11) **EP 4 708 386 A1**

(12) # EUROPEAN PATENT APPLICATION
published in accordance with Art. 153(4) EPC

(43) Date of publication:
**11.03.2026  Bulletin 2026/11**

(21) Application number: **24815939.4**

(22) Date of filing: **03.06.2024**

(51) International Patent Classification (IPC):
$H01M\ 4/36^{(2006.01)}$  $H01M\ 4/525^{(2010.01)}$
$H01M\ 4/505^{(2010.01)}$  $C01G\ 53/00^{(2025.01)}$
$H01M\ 4/131^{(2010.01)}$  $H01M\ 10/052^{(2010.01)}$
$H01M\ 4/02^{(2006.01)}$

(86) International application number:
**PCT/KR2024/007566**

(87) International publication number:
**WO 2024/248565 (05.12.2024 Gazette 2024/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.06.2023  KR 20230071873**

(71) Applicant: **LG Chem, Ltd.**
**Seoul 07336 (KR)**

(72) Inventors:
- **LEE, Ji Young**
  **Daejeon 34122 (KR)**
- **JEONG, Jin Hoo**
  **Daejeon 34122 (KR)**

- **HWANG, Joo Kyoung**
  **Daejeon 34122 (KR)**
- **GU, Ye Hyeon**
  **Daejeon 34122 (KR)**
- **HEO, Kook Jin**
  **Daejeon 34122 (KR)**
- **KIM, Kyung Gu**
  **Daejeon 34122 (KR)**
- **CHOI, Jin Hyuk**
  **Daejeon 34122 (KR)**
- **BYEON, Ji Yeon**
  **Daejeon 34122 (KR)**
- **RYU, Hyeon Mo**
  **Daejeon 34122 (KR)**

(74) Representative: **Hoffmann Eitle**
**Patent- und Rechtsanwälte PartmbB**
**Arabellastraße 30**
**81925 München (DE)**

(54) **CATHODE ACTIVE MATERIAL, PREPARATION METHOD THEREFOR, AND CATHODE AND LITHIUM SECONDARY BATTERY WHICH COMPRISE SAME**

(57)    The present invention relates to a positive electrode active material capable of improving performance of a lithium secondary battery, the positive electrode active material including a lithium composite transition metal oxide in a form of a single particle; and a coating portion provided on the lithium composite transition metal oxide, wherein the coating portion comprises a first coating portion and a second coating portion, wherein the first coating portion is in a form of a discontinuously formed island, and the second coating portion is in a form of a continuously formed coating layer, wherein the first coating portion comprises boron (B) and optionally comprises at least one coating element selected from the group consisting of Co, Al, Ba, Ce, Cr, F, Mg, V, Ti, Fe, Zr, Zn, Si, Y, Nb, Ga, Sn, Mo, W, P, S, Sr, Ta, La, and Hf, the second coating portion comprises a compound having a composition represented by Formula 1 or 2 set forth in the specification, and an amount of boron (B) among total metals excluding lithium in the positive electrode active material is 0.1 mol% to 1.25 mol%, a method for preparing the positive electrode active material, and a positive electrode and lithium secondary battery including the positive electrode active material.

[FIG. 1]

**Description**

**TECHNICAL FIELD**

Cross-reference to Related Applications

This application claims priority from Korean Patent Application No. 10-2023-0071873, filed on June 02, 2023, the disclosure of which is incorporated by reference herein.

Technical Field

The present invention relates to a positive electrode active material, a method for preparing the same, and a positive electrode and lithium secondary battery including the same.

**BACKGROUND ART**

With the recent technological development of electric vehicles, demand for high-capacity secondary batteries is increasing, and, accordingly, research on a positive electrode using a high-nickel (high-Ni) positive electrode active material with excellent capacity characteristics is being actively conducted.

Since co-precipitation is used to prepare the high-Ni positive electrode active material, the prepared high-Ni positive electrode active material has a form of a secondary particle in which primary particles are aggregated. However, the active material in the form of a secondary particle causes a side reaction due to microcracks generated in the secondary particle during a long-term charge and discharge process, and also, in a case in which electrode density is increased to improve energy density, the secondary particle is disadvantageous in that structural collapse of the secondary particle occurs to cause a degradation in life characteristics and a decrease in energy density due to a decrease in the active material and an electrolyte solution.

In order to solve such problems of the high-Ni positive electrode active material in the form of a secondary particle, a single particle-type nickel-based positive electrode active material has recently been developed. The single particle-type nickel-based positive electrode active material has an advantage in that particles do not collapse even when the electrode density is increased for high energy density. However, since a relatively high sintering temperature is required to prepare the single particle-type nickel-based positive electrode active material, a phase change into an Fm-3m rock-salt structure, such as NiO, occurs as an R-3m layered structure is not properly maintained and lithium escapes from the crystal structure and a ratio of NiO on a surface of the prepared single particle-type particle is increased as crystallinity of the positive electrode active material is reduced, and thus, there is a problem in that resistance increases as the NiO increases, and a decrease in energy density and output occurs.

Also, a process of mixing a conductive agent, a binder, an additive, and a solvent with a positive electrode active material to make a slurry has to be performed to manufacture a positive electrode using the positive electrode active material. Here, however, a lithium (Li) byproduct located on a surface in this case alkalizes the solvent, and the alkalized solvent is mixed with the binder to gelate the slurry. And it becomes difficult to uniformly apply the slurry for the manufacture of the positive electrode when using the gelated slurry.

Thus, there is a need to develop a method which may prevent the performance degradation of the positive electrode active material and the gelation of the slurry by introducing an additional process during the preparation of the positive electrode active material to suppress a reaction of the Li byproduct present on the surface of the positive electrode active material with external substances.

[Prior Art Documents]

[Patent Documents]

(Patent Document 1) KR 10-2019-0094529 A
(Patent Document 2) KR 10-2022-0048191 A
(Patent Document 3) KR 10-2022-0048192 A

**DISCLOSURE OF THE INVENTION**

## TECHNICAL PROBLEM

An aspect of the present invention for solving the above problems provides a positive electrode active material capable of reducing gelation of a positive electrode slurry during preparation of the positive electrode slurry and improving capacity characteristics, resistance characteristics, life characteristics, and the like, of a battery.

Another aspect of the present invention for solving the above problems provides a method for preparing the positive electrode active material.

Also, another aspect of the present invention for solving the above problems provides a positive electrode with improved performance by including the positive electrode active material, and a lithium secondary battery including the positive electrode.

## TECHNICAL SOLUTION

In order to solve the above-described tasks, the present invention provides a positive electrode active material, a method for preparing the positive electrode active material, and a positive electrode and lithium secondary battery including the positive electrode active material.

(1) The present invention provides positive electrode active material comprising: a lithium composite transition metal oxide in a form of a single particle; and a coating portion provided on the lithium composite transition metal oxide, wherein the coating portion comprises a first coating portion and a second coating portion, wherein the first coating portion is in a form of a discontinuously formed island, and the second coating portion is in a form of a continuously formed coating layer, wherein the first coating portion comprises boron (B) and optionally comprises at least one coating element selected from the group consisting of cobalt (Co), aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), wherein the second coating portion includes a compound having a composition represented by Formula 1 or 2 below, wherein an amount of boron (B) among total metals excluding lithium in the positive electrode active material is 0.1 mol% to 1.25 mol%.

$$[\text{Formula 1}] \qquad \mathrm{Li}_a\mathrm{Co}_b\mathrm{B}_c\mathrm{M}^1{}_d\mathrm{M}^2{}_e\mathrm{O}_f$$

In Formula 1,

$M^1$ is at least one selected from the group consisting of nickel (Ni) and manganese (Mn),
$M^2$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
$1 \leq a \leq 2$, $1 \leq b \leq 4$, $1 \leq c \leq 2$, $0 \leq d \leq 1$, $0 \leq e \leq 1$, and $2 \leq f \leq 8$.

$$[\text{Formula 2}] \qquad \mathrm{Co}_g\mathrm{B}_h\mathrm{M}^3{}_i\mathrm{M}^4{}_j\mathrm{O}_k$$

In Formula 2,

$M^3$ is at least one selected from the group consisting of Ni and Mn,
$M^4$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
$1 \leq g \leq 4$, $1 \leq h \leq 2$, $0 \leq i \leq 1$, $0 \leq j \leq 1$, and $2 \leq k \leq 8$.

(2) The present invention provides the positive electrode active material of (1) above, wherein the first coating portion is dispersed and distributed on at least one of a surface of the lithium composite transition metal oxide or a surface of the second coating portion.

(3) The present invention provides the positive electrode active material of (1) or (2) above, wherein the amount of boron (B) is 0.13 mol% to 1.1 mol%.

(4) The present invention provides the positive electrode active material of any one of (1) to (3) above, wherein an average particle diameter ($D_{50}$) is 3 $\mu$m to 20 $\mu$m.

(5) The present invention provides the positive electrode active material of any one of (1) to (4) above, wherein the lithium composite transition metal oxide has a composition represented by Formula 3 below.

$$[\text{Formula 3}] \qquad \mathrm{Li}_1\mathrm{Ni}_m\mathrm{Co}_n\mathrm{Mn}_o\mathrm{M}^5{}_p\mathrm{O}_2$$

In Formula 3,

M$^5$ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf, and
$0.9 \leq 1 \leq 1.1$, $0.6 \leq m < 1$, $0 < n < 0.4$, $0 < o < 0.4$, and $0 \leq p < 0.1$.

(6) The present invention provides the positive electrode active material of any one of (1) to (5) above, wherein the first coating portion comprises a compound having a composition represented by Formula 4 below.

[Formula 4]        $Li_q B_r M^6_s M^7_t O_u$

In Formula 4,

M$^6$ is at least one selected from the group consisting of Ni, Co, and Mn,
M$^7$ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
$0 \leq q \leq 4$, $1 \leq r \leq 4$, $0 \leq s \leq 1$, $0 \leq t \leq 1$, and $1 \leq u \leq 8$.

(7) The present invention provides the positive electrode active material of any one of (1) to (6) above, wherein a total area of the coating portion is 10% to 100% of a total surface area of the lithium composite transition metal oxide.

(8) The present invention provides a method for preparing a positive electrode active material, the method comprising steps of: (1) mixing a lithium composite transition metal oxide in a form of a single particle with a cobalt-containing raw material and optionally mixing a coating element-containing raw material to prepare a mixture; (2) sintering the mixture to prepare a sintered product; and (3) mixing the sintered product with a boron-containing raw material, and performing a heat treatment to form a coating portion comprising cobalt (Co) and boron (B) on the lithium composite transition metal oxide, wherein the coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and the sintering is performed at a temperature of 600°C to 800°C.

(9) The present invention provides the method of (8) above, wherein the lithium composite transition metal oxide in the form of a single particle is prepared by a method comprising steps of: (A) preparing a primary sintered product by mixing a composite transition metal hydroxide containing nickel, cobalt, and manganese with a first lithium-containing raw material and performing primary sintering at a temperature of 800°C to 950°C; and (B) preparing a secondary sintered product by mixing the primary sintered product with a second lithium-containing raw material and performing secondary sintering at a temperature of 680°C to 850°C.

(10) The present invention provides the method of (8) or (9) above, further comprising, immediately after step (A), step (A1) of grinding the primary sintered product.

(11) The present invention provides the method of any one of (8) to (10) above, further comprising, immediately after step (B), step (B1) of grinding the secondary sintered product.

(12) The present invention provides a positive electrode comprising the positive electrode active material of any one of (1) to (7) above.

(13) The present invention provides a lithium secondary battery comprising the positive electrode of (12) above, a negative electrode, a separator interposed between the positive electrode and the negative electrode, and an electrolyte.

## ADVANTAGEOUS EFFECTS

A positive electrode active material of the present invention includes a lithium composite transition metal oxide in a form of a single particle, and a coating portion provided on the lithium composite transition metal oxide. The coating portion includes a first coating portion and a second coating portion, and the first coating portion is in a form of a discontinuously formed island, and the second coating portion is in a form of a continuously formed coating layer. The first coating portion includes boron (B) and optionally includes at least one coating element selected from the group consisting of cobalt (Co), aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), the second coating portion includes a compound having a composition represented by Formula 1 or 2 set forth in this specification, and an amount of boron (B) among total metals excluding lithium in the positive electrode active material satisfies a range of 0.1 mol% to 1.25 mol%. Accordingly, there are effects that, when a positive electrode slurry is prepared, gelation is reduced, and a battery including the positive electrode active material is improved in capacity characteristics, resistance characteristics and life characteristics.

**BRIEF DESCRIPTION OF THE DRAWINGS**

FIG. 1(A) is an electron probe microanalyzer (EPMA) analysis image of a positive electrode active material prepared in Example 1. FIG. 1(B) is an EPMA analysis image of a positive electrode active material prepared in Example 2. FIG. 1(C) is an EPMA analysis image of a positive electrode active material prepared in Example 3.

FIG. 2(A) is a scanning electron microscope (SEM) image of the positive electrode active material prepared in Example 1. FIG. 2(B) is an SEM image of the positive electrode active material prepared in Example 2. FIG. 2(C) is an SEM image of the positive electrode active material prepared in Example 3.

FIG. 3 is $Li_2CoBO_3$ peak-related data in a surface analysis result for each of positive electrode active materials prepared in Examples and Comparative Examples.

FIG. 4 is $CoBO_3$ peak-related data in a surface analysis result for each of positive electrode active materials prepared in Examples and Comparative Examples.

FIG. 5(A) is a segmentation image of the positive electrode active material prepared in Example 1. FIG. 5(B) is a segmentation image of the positive electrode active material prepared in Example 2. FIG. 5(C) is a segmentation image of the positive electrode active material prepared in Example 3.

FIG. 6(A) is a segmentation image of a positive electrode active material prepared in Comparative Example 1. FIG. 6(B) is a segmentation image of a positive electrode active material prepared in Comparative Example 2. FIG. 6(C) is a segmentation image of a positive electrode active material prepared in Comparative Example 3. FIG. 6(D) is a segmentation image of a positive electrode active material prepared in Comparative Example 4. FIG. 6(E) is a segmentation image of a positive electrode active material prepared in Comparative Example 5.

FIG. 7 is a graph for temperature over measurement time of a positive electrode slurry including each of the positive electrode active materials prepared in Examples and Comparative Examples.

FIG. 8 is a graph for viscosity over measurement time of the positive electrode slurry including each of the positive electrode active materials prepared in Examples and Comparative Examples.

**BEST MODE FOR CARRYING OUT THE INVENTION**

Hereinafter, the present invention will be described in more detail to allow for understanding of the present invention.

It will be understood that words or terms used in the description of the present invention and the claims shall not be interpreted as the meaning defined in commonly used dictionaries. It will be further understood that the words or terms should be interpreted as having a meaning that is consistent with their meaning in the context of the relevant art and the technical idea of the invention, based on the principle that an inventor may properly define the meaning of the words or terms to best explain the invention.

The term "primary particle" in the present invention refers to the smallest particle unit that is distinguished as one lump when a cross-section of a positive electrode active material is observed through a scanning electron microscope (SEM), and may be composed of one grain or a plurality of grains.

The term "secondary particle" in the present invention refers to a secondary structure formed by aggregation of a plurality of the primary particles. An average particle diameter of the secondary particle may be measured using a particle size analyzer.

In this specification, a "form of a single particle" is a concept in contrast to a form of a spherical secondary particle, which is formed by aggregation of tens to hundreds of primary particles that are prepared by a conventional method, and means a form composed of 50 or less primary particles. Specifically, the form of a single particle in the present invention may be a single particle composed of one primary particle, or may be in the form of a secondary particle in which 2 or more, 3 or more, 4 or more, 5 or more, or 10 or more, and 30 or less, 35 or less, 40 or less, 45 or less, or 50 or less primary particles are aggregated.

The term "average particle diameter ($D_{50}$)" in the present invention refers to a particle diameter at 50% of cumulative distribution of volume according to the particle diameter. After dispersing measurement target powder in a dispersion medium, the dispersion medium is introduced into a commercial laser diffraction particle size measurement instrument (e.g., S3500 by Microtrac), a particle size distribution is calculated by measuring a difference in diffraction patterns due to a particle size when particles pass through a laser beam, and the $D_{50}$ may be measured by calculating a particle diameter at 50% of the cumulative distribution of volume according to the particle diameter using the measurement instrument.

The term "segmentation image" in the present invention refers to a segmented image as an individual positive electrode active material particle unit, and may be obtained by a method including a first step of analyzing positive electrode active material powder through a scanning electron microscope to obtain an SEM image, and a second step of removing an edge of an individual positive electrode active material particle from the SEM image by using a computer image processing technique, and then detecting a seed or contour of the individual positive electrode active material particle and obtaining an segmented image as an individual positive electrode active material particle unit by using the detected seed or contour. Specifically, the segmentation image may be obtained through methods set forth in KR 10-2022-0048191 A and KR 10-2022-0048192 A.

The term "form of an island" in the present invention may refer to a shape having an area of more than 0%, 1% or less, 5% or less, 10% or less, 20% or less, 30% or less, 50% or less, 60% or less, 70% or less, 80% or less, 90% or less, or less than 100%, based on an entire surface area of a lithium composite transition metal oxide.

## Positive Electrode Active Material

Hereinafter, a positive electrode active material according to the present invention will be described.

The positive electrode active material according to the present invention includes a lithium composite transition metal oxide in a form of a single particle, and a coating portion formed on the lithium composite transition metal oxide. The coating portion includes a first coating portion and a second coating portion. The first coating portion is in a form of a discontinuously formed island, and the second coating portion is in a form of a continuously formed coating layer. The first coating portion includes boron (B) and optionally includes at least one coating element selected from the group consisting of cobalt (Co), aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf), the second coating portion includes a compound having a composition represented by Formula 1 or 2 below, and an amount of boron (B) among total metals excluding lithium in the positive electrode active material is 0.1 mol% to 1.25 mol%.

$$[\text{Formula 1}] \qquad Li_aCo_bB_cM^1_dM^2_eO_f$$

In Formula 1,

$M^1$ is at least one selected from the group consisting of nickel (Ni) and manganese (Mn),
$M^2$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
$1 \leq a \leq 2$, $1 \leq b \leq 4$, $1 \leq c \leq 2$, $0 \leq d \leq 1$, $0 \leq e \leq 1$, and $2 \leq f \leq 8$.

$$[\text{Formula 2}] \qquad Co_gB_hM^3_iM^4_jO_k$$

In Formula 2,

$M^3$ is at least one selected from the group consisting of Ni and Mn,
$M^4$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
$1 \leq g \leq 4$, $1 \leq h \leq 2$, $0 \leq i \leq 1$, $0 \leq j \leq 1$, and $2 \leq k \leq 8$.

The lithium composite transition metal oxide is in the form of a single particle composed of 50 or less primary particles. That is, the lithium composite transition metal oxide is a single particle or in the form of a single particle in which 2 to 50 particles are aggregated. Specifically, the lithium transition metal oxide may be in a form composed of 2 to 40 primary particles, 2 to 30 primary particles, 2 to 20 primary particles, and 2 to 10 primary particles, and preferably 2 to 10 primary particles. The form of the single particle is distinct from a secondary particle in which more than 50 primary particles are aggregated.

In a case in which the lithium transition metal oxide is in the form of a single particle, stability may be excellent. Thus, even when being roll-pressed, the positive electrode active material including the lithium composite transition metal oxide may less break or crack, thereby reducing a side reaction between the positive electrode active material and an electrolyte solution. Accordingly, the durability against volume changes during charge and discharge of the battery may be improved to improve life characteristics. With respect to a lithium composite transition metal oxide which is a secondary particle, particle cracking easily occurs during an electrode rolling process, and, as a result, since a surface area of a positive electrode active material is increased, degradation of storage and lifetime performance at high temperatures are intensified. Particularly, with respect to a lithium composite transition metal oxide including a high content of nickel, a problem of a particle cracking phenomenon during rolling for manufacture of a positive electrode occurs more, and, in this case, a side reaction between the lithium composite transition metal oxide and the electrolyte solution may be increased, and physical properties of a battery may be deteriorated.

The lithium composite transition metal oxide may have a layered (R-3m) structure, and may have a high NiO content before the coating portion is formed on the lithium composite transition metal oxide. Since formation of NiO is induced by high sintering temperature required for the preparation of the lithium composite transition metal oxide, a high content of the NiO may be present on a surface of the lithium composite transition metal oxide and there is a problem in that the NiO reduces energy density of the battery and degrades resistance characteristics and output characteristics.

The positive electrode active material of the present invention includes the coating portion provided on the lithium composite transition metal oxide, and the coating portion includes a first coating portion and a second coating portion, where the first coating portion is in the form of a discontinuously formed island, the second coating portion is in the form of a continuously formed coating layer, the first coating portion includes boron (B) and optionally includes at least one coating element selected from the group consisting of Co, Al, Ba, Ce, Cr, F, Mg, V, Ti, Fe, Zr, Zn, Si, Y, Nb, Ga, Sn, Mo, W, P, S, Sr, Ta, La, and Hf, and the second coating portion includes the compound having the composition represented by Formula 1 or 2 set forth in the present specification.

By including the coating portion, the present invention has effects that the side reaction between the positive electrode active material and the electrolyte solution is reduced, and the NiO content in the positive electrode active material is decreased. Also, since the first coating portion and the like include boron (B), density of the positive electrode active material is reduced so that there is an effect of improving dispersibility of the positive electrode active material during preparation of a positive electrode slurry, and, since precipitation of the positive electrode active material particles in the positive electrode slurry over time during storage of the prepared positive electrode slurry may be reduced, gelation, that is, a phenomenon, in which aggregation between the particles occurs while the positive electrode active material particles are precipitated downward in the positive electrode slurry, may be reduced. In addition, sphericity of the positive electrode active material may be increased, and, accordingly, an effect of reducing collisions between the particles and friction between a stirrer and the particles during the preparation of the positive electrode slurry may be exhibited. In contrast, in a case in which the lithium composite transition metal oxide does not include the coating portion, there is a problem of poor life characteristics due to the side reaction between the positive electrode active material and the electrolyte solution, and in a case in which the first coating portion does not include boron, there is a problem in that the gelation excessively occurs during the preparation of the positive electrode slurry due to poor dispersibility of the positive electrode active material.

In Formula 1 above, $M^1$ is at least one selected from the group consisting of Ni and Mn, and $M^2$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf. $M^2$ is not necessarily included, but may improve the capacity characteristics and life characteristics.

a may be 1 or more, or 1.5 or more, and may be 2 or less.

b may be 1 or more, and may be 2 or less, 3 or less, or 4 or less.

c may be 1 or more, and may be 1.5 or less, or 2 or less.

d may be 0 or more, and may be 0.5 or less, or 1 or less.

e may be 0 or more, and may be 0.5 or less, or 1 or less.

f may be 2 or more, or 3 or more, and may be 4 or less, 5 or less, 6 or less, 7 or less, or 8 or less.

When a, b, c, d, e, and f are within the above ranges, the capacity characteristics and life characteristics of a manufactured battery may be improved. Particularly, $Li_2CoBO_3$ has an effect of suppressing the gelation of the positive electrode slurry.

In Formula 2 above, $M^3$ is at least one selected from the group consisting of Ni and Mn, and $M^4$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf.

g may be 1 or more, and may be 2 or less, 3 or less, or 4 or less.

h may be 1 or more, and may be 1.5 or less, or 2 or less.

i may be 0 or more, and may be 0.5 or less, or 1 or less.

j may be 0 or more, and may be 0.5 or less, or 1 or less.

k may be, f may be, 2 or more, or 3 or more, and may be 4 or less, 5 or less, 6 or less, 7 or less, or 8 or less.

When g, h, i, j, and k are within the above ranges, the capacity characteristics and life characteristics of the manufactured battery may be improved. Particularly, $CoBO_3$ has an effect of suppressing the gelation of the positive electrode slurry.

And, according to the present invention, the amount of the boron (B) among the total metals excluding lithium in the positive electrode active material is 0.1 mol% to 1.25 mol%. Specifically, the amount of the boron (B) may be 0.1 mol% or more, or 0.2 mol% or more, and may be 1.1 mol% or less, 1.2 mol% or less, or 1.25 mol% or less. In a case in which the amount of the boron (B) is within the above range, there is an effect of reducing the gelation of the positive electrode slurry due to a decrease in the density of the positive electrode active material, an improvement in dispersibility of the positive electrode active material, and an increase in sphericity. Particularly, in a case in which the amount of the boron (B) is 0.13 mol% to 1.1 mol%, there is an effect of improving capacity characteristics. In contrast, in a case in which the amount of the boron (B) is less than 0.1 mol%, there is a problem in that it is difficult to increase the dispersibility of the positive electrode active material or improve the sphericity, and, in a case in which the amount of the boron (B) is more than 1.25 mol%, there is a problem in that the resistance characteristics are poor.

According to an embodiment of the present invention, the first coating portion may be dispersed and distributed on at least one of the surface of the lithium composite transition metal oxide or a surface of the second coating portion. The "being dispersed and distributed" means a form which is not formed by being continuously connected, but is formed by being dispersed in dots. In this case, the first coating portion has an effect of improving the capacity characteristics and life characteristics while not acting as resistance.

According to an embodiment of the present invention, an average particle diameter ($D_{50}$) may be 3 $\mu$m to 20 $\mu$m. Specifically, the average particle diameter ($D_{50}$) may be 3 $\mu$m or more, or 3.5 $\mu$m or more, and may be 5 $\mu$m or less, 6 $\mu$m or less, 7 $\mu$m or less, 8 $\mu$m or less, 9 $\mu$m or less, 10 $\mu$m or less, 11 $\mu$m or less, 12 $\mu$m or less, 13 $\mu$m or less, 14 $\mu$m or less, 15 $\mu$m or less, 16 $\mu$m or less, 17 $\mu$m or less, 18 $\mu$m or less, 19 $\mu$m or less, or 20 $\mu$m or less. In a case in which the average particle diameter is within the above range, excellent electrode density may be achieved and the capacity characteristics may be improved.

According to an embodiment of the present invention, the lithium composite transition metal oxide may have a composition represented by Formula 3 below.

$$[\text{Formula 3}] \qquad Li_lNi_mCo_nMn_oM^5{}_pO_2$$

In Formula 3,

M$^5$ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf, and,
$0.9 \leq l \leq 1.1$, $0.6 \leq m < 1$, $0 < n < 0.4$, $0 < o < 0.4$, and $0 \leq p < 0.1$.

In Formula 3 above,

M$^5$ is a doping element, and specifically, M$^5$ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf. M$^5$ is not necessarily included, but may improve the capacity characteristics and life characteristics.

l may be 0.9 or more, or 1.0 or more, and may be 1.1 or less. When l satisfies the above range, high safety and high energy density per unit volume may be achieved.

m is a molar ratio of nickel (Ni) among total metals excluding lithium in a lithium composite transition metal compound, and m may be 0.6 or more, 0.7 or more, 0.8 or more, or 0.9 or more, and may be 0.96 or less, 0.97 or less, 0.98 or less, 0.99 or less, or less than 1. When b satisfies the above range, high energy characteristics may be achieved.

n is a molar ratio of cobalt (Co) among the total metals excluding lithium in the lithium composite transition metal compound, and n may be greater than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When n satisfies the above range, stability may be improved during charge and discharge processes, and rate capability may be improved.

o is a molar ratio of manganese (Mn) among the total metals excluding lithium in the lithium composite transition metal compound, and o may be more than 0, 0.01 or more, or 0.02 or more, and may be 0.03 or less, 0.04 or less, 0.05 or less, 0.06 or less, 0.07 or less, 0.08 or less, 0.09 or less, 0.1 or less, 0.11 or less, 0.12 or less, 0.13 or less, 0.14 or less, 0.15 or less, 0.16 or less, 0.17 or less, 0.18 or less, 0.19 or less, 0.2 or less, 0.21 or less, 0.22 or less, 0.23 or less, 0.24 or less, 0.25 or less, 0.26 or less, 0.27 or less, 0.28 or less, 0.29 or less, 0.3 or less, 0.31 or less, 0.32 or less, 0.33 or less, 0.34 or less, 0.35 or less, 0.36 or less, 0.37 or less, 0.38 or less, 0.39 or less, or less than 0.4. When o satisfies the above range, high-temperature stability may be increased and the side reaction with the electrolyte solution may be relatively reduced.

p is a molar ratio of M$^5$ among the total metals excluding lithium in the lithium composite transition metal compound, and p may be 0 or more, 0.01 or more, 0.02 or more, 0.03 or more, 0.04 or more, or 0.05 or more, and may be 0.06 or less, 0.07 or less, 0.08 or less, 0.09 or less, or less than 1. When p satisfies the above range, stability of a crystal structure of the positive electrode active material may be improved and a particle shape may be improved.

According to an embodiment of the present invention, the first coating portion may include a compound having a composition represented by Formula 4 below.

$$[\text{Formula 4}] \qquad Li_qB_rM^6{}_sM^7{}_tO_u$$

In Formula 4,

M⁶ is at least one selected from the group consisting of Ni, Co, and Mn,
M⁷ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
$0 \leq q \leq 4$, $1 \leq r \leq 4$, $0 \leq s \leq 1$, $0 \leq t \leq 1$, and $1 \leq u \leq 8$.

In Formula 4 above, $M^6$ is at least one selected from the group consisting of Ni, Co, and Mn, and $M^7$ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf.

q may be 0 or more, and may be 1 or less, 2 or less, 3 or less, or 4 or less.

r may be 1 or more, and may be 2 or less, 3 or less, or 4 or less.

s may be 0 or more, and may be 0.5 or less, or 1 or less.

t may be 0 or more, and may be 0.5 or less, or 1 or less.

u may be 1 or more, 2 or more, or 3 or more, and may be 4 or less, 5 or less, 6 or less, 7 or less, or 8 or less.

When q, r, s, t, and u are within the above ranges, the capacity characteristics and life characteristics of the manufactured battery may be improved. Particularly, $Li_2CoBO_3$ and $CoBO_3$ have the effect of suppressing the gelation of the positive electrode slurry.

According to an embodiment of the present invention, the first coating portion may be at least one selected from the group consisting of $B_2O_3$, $Li_2BO_3$, $Li_2B_4O_7$, $Li_3BO_3$, $Li_xB_yO_z$ ($1 \leq x \leq 3$, $1 \leq y \leq 4$, and $2 \leq z \leq 7$), $LiCoBO_3$, and $LiAl_{0.1}Co_{0.9}BO_3$.

In this specification, the surface means an outermost surface of the lithium composite transition metal oxide. In addition, a region having a constant thickness from the outermost surface of the lithium composite transition metal oxide toward the center of the positive electrode active material particle may be expressed as a surface portion. The surface portion may be a region having a depth of 1 nm to 50 nm, and specifically 5 nm to 30 nm, from the outermost surface of the lithium composite transition metal oxide toward the center of the positive electrode active material particle. In contrast to the surface portion, an interior excluding the surface portion in the lithium composite transition metal oxide may be referred to as a core.

The surface portion of the lithium composite transition metal oxide may be doped with cobalt, boron, or cobalt and boron which are diffused from the coating portion.

The coating portion may be formed on the surface as the outermost surface of the lithium composite transition metal oxide, and the coating portion may be formed on a portion or all of the outer surface.

According to an embodiment of the present invention, a total area of the coating portion may be in a range of 10% to 100% of an entire surface area of the lithium composite transition metal oxide. Specifically, the total area of the coating portion may be 10% or more, 15% or more, 20% or more, 25% or more, 30% or more, 35% or more, 40% or more, 45% or more, or 50% or more, and may be 55% or less, 60% or less, 65% or less, 70% or less, 75% or less, 80% or less, 90% or less, 95% or less, or 100% or less of the entire surface area of the lithium composite transition metal oxide. In a case in which the total area of the coating portion is within the above range, there are effects that the coating portion prevents the side reaction between the positive electrode active material and the electrolyte solution while not acting as resistance, and the life characteristics and capacity characteristics of the battery are improved.

According to an embodiment of the present invention, the first coating portion and the second coating portion may have the same or different compositions. The composition may be a comparison of an amount of the first coating portion and an amount of the second coating portion within a region twice a diameter of the first coating portion which is centered on the first coating portion. When the compositions are different, amounts of the coating element excluding B and Co may be different, and the amount of the coating element excluding B and Co in the first coating portion may be higher than the amount of coating element excluding B and Co in the second coating portion.

## Method for Preparing Positive Electrode Active Material

Next, a method for preparing a positive electrode active material of the present invention will be described. This method for preparing the positive electrode active material of the present invention is a method for preparing the above-described positive electrode active material according to the present invention.

The method for preparing the positive electrode active material according to the present invention includes steps of (1) mixing a lithium composite transition metal oxide in a form of a single particle with a cobalt-containing raw material and optionally mixing a coating element-containing raw material to prepare a mixture, (2) sintering the mixture to prepare a sintered product, and (3) mixing the sintered product with a boron-containing raw material, and performing a heat treatment to form a coating portion including cobalt (Co) and boron (B) on the lithium composite transition metal oxide, where the coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and the sintering is performed at a temperature of 600°C to 800°C.

The above-described positive electrode active material according to the present invention may be prepared by appropriately adjusting types of the raw materials, a mixing ratio of the raw materials, the heat treatment step, the heat treatment temperature, a heat treatment heating rate, a heat treatment atmosphere, or the like.

Hereinafter, each of the steps according to the present invention will be specifically described.

**Step (1)**

The present invention includes step (1) of mixing the lithium composite transition metal oxide in the form of a single particle with the cobalt-containing raw material and optionally mixing the coating element-containing raw material to prepare the mixture.

With respect to the mixture of the present invention, the lithium composite transition metal oxide of the present invention is mixed by a dry mixing method using a solid-phase raw material mixture, and the dry mixing method has an advantage of being able to mass-produce through a relatively simple synthesis process.

According to an embodiment of the present invention, the cobalt-containing raw material may be mixed in an amount of 0.1 mol% to 10 mol%, particularly 0.5 mol% to 5 mol%, and more particularly 1 mol% to 3 mol% based on the lithium composite transition metal oxide. In a case in which the cobalt raw material is mixed in an amount within the above range, a coating portion including cobalt may be sufficiently formed on the lithium composite transition metal oxide while an unreacted cobalt compound is not remained on the surface of the particle.

The cobalt-containing raw material may be an oxide, hydroxide, oxyhydroxide, carbonate, sulfate, halide, sulfide, acetate, nitrate, or carboxylate containing cobalt, or a combination thereof, and, for example, may include $Co(OH)_2$, $CoOOH$, $Co(OCOCH_3)_2 \cdot 4H_2O$, $Co(NO_3)_2 \cdot 6H_2O$, or $Co(SO_4)_2 \cdot 7H_2O$, any one thereof or a mixture of two or more thereof may be used, and $Co(OH)_2$ may specifically be used.

The coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf. The coating element-containing raw material may be , for example, an oxide, hydroxide, oxyhydroxide, carbonate, sulfate, halide, sulfide, acetate, nitrate, or carboxylate containing the coating element, or a combination thereof, and specifically, may include $Co(OH)_2$, $ZrO_2$, $Zr(OH)_4$, $ZnO$, $TiO_2$, $WO_3$, $Al_2O_3$, $Al(OH)_3$, $Al_2(SO_4)_3$, $\cdot xH_2O$, $AlCl_3$, $C_2H_5O_4Al$, Al-isopropoxide, $Al(NO_3)_3$, $AlF$, $Li_3WO_4$, $(NH_4)_{10}W_{12}O_{41} \cdot 5H_2O$, or $NH_4H_2PO_4$, but is not limited thereto.

According to an embodiment of the present invention, the coating element-containing raw material may be used in an amount such that an amount of the coating element is 0.001 mol% to 10 mol%, particularly, 0.005 mol% to 5 mol% based on the number of moles of the total metals in the lithium composite transition metal oxide. In a case in which the mixing amount of the coating element-containing raw material is within the above range, an effect of effectively suppressing the side reaction with the electrolyte solution may be expected, and electrochemical properties may be further improved.

According to an embodiment of the present invention, the lithium composite transition metal oxide in the form of a single particle may be prepared by a method including steps of (A) preparing a primary sintered product by mixing a composite transition metal hydroxide containing nickel, cobalt, and manganese with a first lithium-containing raw material, and performing primary sintering at a temperature of 800°C to 950°C, and (B) preparing a secondary sintered product by mixing the primary sintered product with a second lithium-containing raw material and performing secondary sintering at a temperature of 680°C to 850°C. The first lithium-containing raw material and the second lithium-containing raw material may be the same or different.

The lithium composite transition metal oxide may be prepared through a process of adding the lithium-containing raw material in two portions. That is, the lithium-containing raw material is dividedly added before the primary sintering and before the secondary sintering, respectively. In this case, there is an advantage in that intercalation of lithium into a rock salt structure, which may be formed on the surface, favors restoration of a layered structure.

Specifically, the primary sintering may be performed at a temperature of 800°C or more, or 820°C or more, and 850°C or less, 900°C or less, or 950°C or less, and the secondary sintering may be performed at a temperature of 680°C or more, 700°C or more, or 720°C or more, and 750°C or less, 760°C or less, 770°C or less, 780°C or less, 790°C or less, 800°C or less, 810°C or less, 820°C or less, 830°C or less, 840°C or less, or 850°C or less. In a case in which the primary sintering is performed in the above temperature range, sufficient energy required for single particle formation may be supplied, and, in a case in which the secondary sintering is performed in the above temperature range, lithium may be supplemented into the lithium composite transition metal oxide to minimize a NiO phase.

In a case in which the lithium-containing raw material is added in two portions, in step (A), the first lithium-containing raw material may be mixed such that a ratio (M:Li) of the total number of moles (M) of transition metals included in the composite transition metal hydroxide to the number of moles (Li) of lithium included in the first lithium-containing raw material is 1:0.98, 1:0.99, 1:1.00, 1:1.01, or 1:1.02 or more, and 1:1.04, or 1:1.05 or less, and, in step (B), the second lithium-containing raw material may be mixed such that a ratio (M':Li) of the total number of moles (M') of transition metals included in the primary sintered product in step (A) to the total number of moles (Li) of lithium included in the primary sintered product is 1:1.01, or 1:1.05 or more, and 1:1.06, 1:1.07, 1:1.08, 1:1.09, or 1:1.10 or less.

The primary sintering may be performed in an oxygen atmosphere, in terms of preventing the degradation of the lithium transition metal oxide into the rock salt structure.

The primary sintering may be performed for 3 hours or more, 4 hours or more, 5 hours or more, or 6 hours or more, and 9 hours or less, 10 hours or less, 11 hours or less, or 12 hours or less, in terms of aggregating the primary particles and improving crystallinity of the primary sintered product.

The secondary sintering may be performed in an oxygen atmosphere, in terms of preventing the degradation of the lithium composite transition metal oxide into the rock salt structure.

The secondary sintering may be performed for 3 hours or more, and 4 hours or less, 5 hours or less, 6 hours or less, 7 hours or less, 8 hours or less, 9 hours or less, 10 hours or less, 11 hours or less, or 12 hours or less, in terms of increasing a degree of crystallinity of the internal crystal structure of the positive electrode active material.

According to an embodiment of the present invention, immediately after step (A), step (A1) of grinding the primary sintered product may be further included. In this case, process efficiency and quality of the positive electrode active material may be improved by controlling a particle size. The primary sintered product may be ground such that an average particle diameter ($D_{50}$) is 3 $\mu$m to 20 $\mu$m, in terms of preventing an increase in initial resistance.

According to an embodiment of the present invention, immediately after step (B), a step of (B1) grinding the secondary sintered product may be further included. In this case, the process efficiency and the quality of the positive electrode active material may be improved by controlling a particle size. The primary sintered product may be ground such that an average particle diameter (D50) is in a range of 3 $\mu$m to 20 $\mu$m, in terms of preventing the increase in initial resistance.

The grinding in steps (A1) and (B1) may be performed using a pin mill, an air classifying mill (ACM), a jet mill, or the like. With respect to the pin mill, milling may be performed at 18,000 rpm, with respect to the ACM, classification may be performed at 6,000 rpm and main milling may be performed at 12,000 rpm using equipment by Hosokawa, and, with respect to the jet mill, classification may be performed at 3,500 rpm and milling may be performed at a pressure of 6 bars using equipment by ZM solution. In this case, the positive electrode active material having a desired average particle diameter ($D_{50}$) may be easily obtained.

**Step (2)**

Thereafter, step (2) of sintering the mixture to prepare a sintered product is included.

The sintering is performed at a temperature of 600°C to 800°C. Specifically, the sintering is performed at a temperature of 600°C or more, 650°C or more, or 700°C or more, and 750°C or less, or 800°C or less. In a case in which the sintering temperature satisfies the above range, since the coating portion including cobalt is formed in the form of a discontinuous island on the lithium composite transition metal oxide, specifically, the surface of the lithium composite transition metal oxide during a heating process for the sintering, the cobalt present as a $LiCoO_2$ phase may penetrate into the lithium composite transition metal oxide to an appropriate depth to appropriately change a NiO layer, as a degenerated layer, into a nickel cobalt manganese (NCM) oxide layered structure, and accordingly, excellent effects may be exhibited in cell performance, such as charge and discharge capacity, initial efficiency, and initial resistance, by allowing an oxidation number gradient layer, in which the oxidation number of nickel increases toward the outermost surface, to be included in the surface portion while the surface portion of the lithium composite transition metal oxide has a layered (R-3m) structure. In contrast, in a case in which the sintering temperature is less than 600°C, since a thickness of the coating portion becomes thick and the coating portion is excessively formed, it is difficult to achieve the advantages of the formation of the coating portion as described above, and, in a case in which the sintering temperature is more than 800°C, since the lithium composite transition metal oxide may be deeply doped with the cobalt, the coating portion may not be properly formed in the surface portion.

The sintering may be performed for 2 hours or more, and 6 hours or less, 9 hours or less, or 12 hours or less. In a case in which the sintering is performed within the above time range, excellent productivity may be exhibited, and uniform sintering may also be achieved.

According to an embodiment of the present invention, if step (2) is performed, a coating portion including Co may be formed on the lithium composite transition metal oxide, and specifically, the second coating portion represented by Formula 1 or 2 set forth in this specification may be formed.

**Step (3)**

Step (3) of mixing the sintered product with the boron-containing raw material, and performing the heat treatment to form the coating portion including cobalt (Co) and boron (B) on the lithium composite transition metal oxide is included.

The boron-containing raw material may be an oxide, hydroxide, oxyhydroxide, carbonate, sulfate, halide, sulfide, acetate, nitrate, or carboxylate containing boron, or a combination thereof, and for example, may include $B(OH)_3$, $H_2BO_3$,

$HBO_2$, $H_3BO_3$, $H_2B_4O_7$, $B_2O_3$, $C_6H_5B(OH)_2$, $(C_6H_5O)_3B$, $[(CH_3(CH_2)_3O)_3B$, $C_3H_9B_3O_6$, $(C_3H_7O_3)B$, or the like, but is not limited thereto.

According to an embodiment of the present invention, the boron-containing raw material may be mixed such that an amount of the boron-containing raw material is 0.15 mol% to 1.25 mol%, particularly 0.20 mol% to 1.10 mol%, and more particularly 0.25 mol% to 1.05 mol% based on the sintered product. In a case in which the mixing amount of the boron-containing raw material is within the above range, the amount of boron in the coating portion formed may satisfy an appropriate range.

According to an embodiment of the present invention, the heat treatment may be performed at a temperature of 200°C or more, 250°C or more, or 300°C or more, and 350°C or less, 400°C or less, 420°C or less, 440°C or less, 460°C or less, 480°C or less, or 500°C or less. In a case in which the heat treatment temperature satisfies the above range, the boron-containing raw material may appropriately form an amorphous boron coating portion other than a boron oxide. When the heat treatment temperature is excessively high, properties as a positive electrode active material may be impaired by forming a boron oxide on the surface of the lithium composite transition metal oxide.

The heat treatment may be performed for 3 hours or more, and 6 hours or less, 7 hours or less, 8 hours or less, 9 hours or less, 10 hours or less, 11 hours or less, or 12 hours or less. In a case in which the heat treatment is performed within the above time range, excellent productivity may be exhibited, and uniform sintering may also be achieved.

According to an embodiment of the present invention, if step (3) is performed, a coating portion including B may be formed on the lithium composite transition metal oxide, and specifically, the first coating portion represented by Formula 4 or the second coating portion represented by Formula 1 or 2, set forth in this specification, may be formed.

According to an embodiment of the present invention, since cobalt, boron, or cobalt and boron diffuse from the surface of the lithium composite transition metal oxide toward the center of the positive electrode active material particle in steps (1) to (3), a coating portion may be formed.

According to another embodiment of the present invention, a positive electrode including the above-described positive electrode active material is provided. Specifically, the positive electrode includes a positive electrode current collector and a positive electrode active material layer which is formed on the positive electrode current collector and includes the above-described positive electrode active material.

The positive electrode current collector is not particularly limited as long as having conductivity without causing chemical changes in the battery, and, for example, stainless steel, aluminum, nickel, titanium, fired carbon, or aluminum or stainless steel that is surface-treated with one of carbon, nickel, titanium, silver, or the like may be used. Also, the positive electrode current collector may generally have a thickness of 3 $\mu$m to 500 $\mu$m, and microscopic irregularities may be formed on a surface of the current collector to improve adhesion of the positive electrode active material. The positive electrode current collector may be used in various shapes, for example, a film, a sheet, a foil, a net, a porous body, a foam body, a non-woven fabric body, and the like.

The positive electrode active material layer may include a conductive agent and a binder in addition to the above-described positive electrode material.

Here, the conductive agent is used to provide conductivity to the electrode, and any conductive agent may be used without particular limitation as long as having electron conductivity without causing chemical changes in the provided battery. As a specific example, the conductive agent may be graphite such as natural graphite or artificial graphite, carbon-based materials such as carbon black, acetylene black, Ketjen black, channel black, furnace black, lamp black, thermal black, and carbon fibers, powder or fibers of a metal such as copper, nickel, aluminum, or silver, conductive whiskers such as zinc oxide whiskers and potassium titanate whiskers, conductive metal oxides such as titanium oxide, or conductive polymers such as polyphenylene derivatives, and any one thereof or a mixture of two or more thereof may be used. The conductive agent may be generally included in an amount of 1 wt% to 30 wt% based on the total weight of the positive electrode active material layer.

The binder serves to improve the adhesion between positive electrode active material particles and the adhesion between the positive electrode active material and the current collector. As a specific example, the binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene monomer (EPDM), a sulfonated EPDM, a styrene-butadiene rubber (SBR), a fluorine rubber, or various copolymers thereof, and any one thereof or a mixture of two or more thereof may be used. The binder may be included in an amount of 1 wt% to 30 wt% based on the total weight of the positive electrode active material layer.

The positive electrode may be manufactured according to a general method for manufacturing a positive electrode except that the above-described positive electrode active material is used. Specifically, a composition for forming a positive electrode active material layer, which is prepared by dissolving or dispersing the above-described positive electrode active material as well as optionally the binder and the conductive agent in a solvent, may be applied onto the positive electrode current collector, and then undergone drying and rolling to manufacture the positive electrode. Here, types and amounts of the positive electrode active material, the binder, and the conductive agent are the same as those previously described.

The solvent may be a solvent commonly used in this technical field. The solvent may include dimethyl sulfoxide (DMSO), isopropyl alcohol, N-methylpyrrolidone (NMP), acetone, water, or the like, and any one thereof or a mixture of two or more thereof may be used. An amount of the solvent used may be sufficient if the solvent may dissolve or disperse the positive electrode active material, the conductive agent, and the binder in consideration of a coating thickness of a slurry and manufacturing yield, and may allow to have a viscosity that may provide excellent thickness uniformity during the subsequent coating for the manufacture of the positive electrode.

Also, as another method, the positive electrode may be manufactured by casting the composition for forming the positive electrode active material layer on a separate support and then laminating a film separated from the support on the positive electrode current collector.

According to another embodiment of the present invention, an electrochemical device including the positive electrode is provided. The electrochemical device may be, specifically, a battery, a capacitor, or the like, and more specifically, may be a lithium secondary battery.

The lithium secondary battery specifically includes a positive electrode, a negative electrode disposed to oppose the positive electrode, and a separator and an electrolyte which are interposed between the positive electrode and the negative electrode. The positive electrode is the same as described above. The lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode current collector and a negative electrode active material layer disposed on the negative electrode current collector.

The negative electrode current collector is not particularly limited as long as having high conductivity without causing chemical changes in the battery, and, for example, copper, stainless steel, aluminum, nickel, titanium, fired carbon, copper or stainless steel which is surface-treated with one of carbon, nickel, titanium, silver, or the like, and an aluminum-cadmium alloy may be used. Also, the negative electrode current collector may generally have a thickness of 3 μm to 500 μm, and, like the positive electrode current collector, the microscopic irregularities may be formed on a surface of the current collector to improve adhesion of the negative electrode active material. The negative electrode current collector may be used in various shapes, for example, a film, a sheet, a foil, a net, a porous body, a foam body, a non-woven fabric body, and the like.

The negative electrode active material layer optionally includes a binder and a conductive agent in addition to the negative electrode active material.

A compound capable of reversibly intercalating and deintercalating lithium may be used as the negative electrode active material. As a specific example, the negative electrode active material may be a carbonaceous material such as artificial graphite, natural graphite, graphitized carbon fibers, and amorphous carbon, a metallic compound alloyable with lithium such as silicon (Si), aluminum (Al), tin (Sn), lead (Pb), zinc (Zn), bismuth (Bi), indium (In), magnesium (Mg), gallium (Ga), cadmium (Cd), a Si alloy, a Sn alloy, or an Al alloy, a metal oxide which may be doped and undoped with lithium such as $SiO\beta(0<\beta<2)$, $SnO_2$, vanadium oxide, and lithium vanadium oxide, or a composite such as a Si-C composite or a Sn-C composite including the metallic compound and the carbonaceous material, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature sintered carbon such as petroleum or coal tar pitch derived cokes.

Also, the binder and the conductive agent may be the same as those previously described in the positive electrode.

As an example, the negative electrode active material layer may be prepared by applying a composition for forming a negative electrode, which is prepared by dissolving or dispersing optionally the binder and the conductive agent as well as the negative electrode active material in a solvent, onto the negative electrode current collector and drying the coated negative electrode current collector, or may be prepared by casting the composition for forming a negative electrode on a separate support and then laminating a film separated from the support on the negative electrode current collector.

In the lithium secondary battery, the separator separates the negative electrode and the positive electrode and provides a movement path of lithium ions, and any separator may be used as the separator without particular limitation as long as being generally used in the lithium secondary battery. And particularly, a separator having good moisture-retention ability for an electrolyte solution as well as low resistance to the ion transfer of the electrolyte may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a general porous nonwoven fabric, for example, a nonwoven fabric formed of high melting point glass fibers or polyethylene terephthalate fibers may be used. Alternatively, a coated separator including a ceramic component or a polymer material may be used to secure heat resistance or mechanical strength, and the separator having a single-layer or multilayer structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, a molten-type inorganic electrolyte, or the like which may be used in the manufacture of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone, an ether-based solvent such as dibutyl ether or tetrahydrofuran, a ketone-based solvent such as cyclohexanone, an aromatic hydrocarbon-based solvent such as benzene and fluorobenzene, a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC), an alcohol-based solvent such as ethyl alcohol and isopropyl alcohol, nitriles such as R-CN (where R is a linear, branched, or cyclic C2-C20 hydrocarbon group and may include a double-bond aromatic ring or ether bond), amides such as dimethylformamide, dioxolanes such as 1,3-dioxolane, or sulfolanes may be used as the organic solvent. Among these solvents, the carbonate-based solvent is preferable, and a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) is more preferable. In this case, the performance of the electrolyte solution may be excellent when the cyclic carbonate and the chain carbonate are mixed in a volume ratio of about 1:1 to about 1:9.

The lithium salt may be used without particular limitation as long as the lithium salt is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$. $LiCl$, $LiI$, $LiB(C_2O_4)_2$, or the like may be used as the lithium salt. The lithium salt may be used in a range of a concentration of 0.1 M to 2.0 M. In a case in which the concentration of the lithium salt is included within the above range, the electrolyte may have appropriate conductivity and viscosity. Thus, excellent performance of the electrolyte may be exhibited and lithium ions may effectively move.

In order to improve life characteristics of the battery, suppress a reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. Here, the additive may be included in an amount of 0.1 wt% to 5 wt% based on a total weight of the electrolyte.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric vehicles such as hybrid electric vehicles (HEVs).

Accordingly, according to another embodiment of the present invention, a battery module including the lithium secondary battery as a unit cell, and a battery pack including the battery module are provided.

The battery module or the battery pack may be used as a power source of at least one medium and large sized device of a power tool, electric vehicles including an electric vehicle (EV), a hybrid electric vehicle, and a plug-in hybrid electric vehicle (PHEV), or a power storage system.

An outer shape of the lithium secondary battery according to the present invention is not particularly limited, but a cylindrical type using a can, a prismatic type, a pouch type, a coin type, or the like may be used.

The lithium secondary battery according to the present invention may be used in a battery cell that is used as a power source of a small device, and also, may be used as a unit cell in a medium and large sized battery module including a plurality of battery cells.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## MODE FOR CARRYING OUT THE INVENTION

### Preparation Examples

**Preparation Example 1**

A composite transition metal hydroxide [composition: $Ni_{0.95}Co_{0.03}Mn_{0.02}(OH)_2$, average particle diameter ($D_{50}$): 3.5 $\mu$m] and LiOH were mixed such that a molar ratio of (Ni+Co+Mn) :Li was 1:1.00, and primarily sintered at 820°C for 6 hours in an oxygen atmosphere to prepare a primary sintered product, and then the primary sintered product was ground.

Thereafter, the primary sintered product and LiOH were mixed such that a molar ratio of (Ni+Co+Mn) :total Li was 1:1.05, and secondarily sintered at 740°C for 12 hours in an oxygen atmosphere to prepare a lithium composite transition metal oxide (secondary sintered product) being in a form of a single particle and having a composition represented by $LiNi_{0.95}Co_{0.03}Mn_{0.02}O_2$.

The lithium composite transition metal oxide and $Co(OH)_2$ in the form of powder (Huayou Cobalt Co., Ltd.) were added to a reactor such that a molar ratio of the lithium composite transition metal oxide to $Co(OH)_2$ was 98:2, and $Al(OH)_3$ was added in an amount of 500 ppm based on a total weight of the lithium composite transition metal oxide and then dry-mixed using an acoustic mixer to prepare a mixture. The mixture was sintered at 700°C for 3 hours to obtain a sintered product in a cake state, and the sintered product was ground to prepare a sintered product in a form of powder.

**Examples and Comparative Examples**

**Example 1**

The sintered product prepared in Preparation Example 1 and $B(OH)_3$ were dry-mixed such that a molar ratio of the sintered product to $B(OH)_3$ was 99.75:0.25, and then heat-treated at 330°C for 5 hours to obtain a positive electrode active material in a cake state, and the positive electrode active material was ground to prepare a positive electrode active material in a form of powder. The positive electrode active material had a coating portion including cobalt and boron formed on the lithium composite transition metal oxide, and had an average particle diameter ($D_{50}$) of 3.8 $\mu$m.

**Example 2**

A positive electrode active material was prepared in the same manner as in Example 1 except that the sintered product prepared in Preparation Example 1 and $B(OH)_3$ were dry-mixed such that the molar ratio of the sintered product to $B(OH)_3$ was 99.5:0.5.

**Example 3**

A positive electrode active material was prepared in the same manner as in Example 1 except that the sintered product prepared in Preparation Example 1 and $B(OH)_3$ were dry-mixed such that the molar ratio of the sintered product to $B(OH)_3$ was 99.0:1.0.

**Comparative Example 1**

The sintered product in the form of powder, which had been prepared in Preparation Example 1, was used as a positive electrode active material of Comparative Example 1.

**Comparative Example 2**

A positive electrode active material was prepared in the same manner as in Example 1 except that the sintered product prepared in Preparation Example 1 and $B(OH)_3$ were dry-mixed such that the molar ratio of the sintered product to $B(OH)_3$ was 99.9:0.1.

**Comparative Example 3**

A positive electrode active material was prepared in the same manner as in Example 1 except that the sintered product prepared in Preparation Example 1 and $B(OH)_3$ were dry-mixed such that the molar ratio of the sintered product to $B(OH)_3$ was 98.5:1.5.

**Comparative Example 4**

A composite transition metal hydroxide [composition: $Ni_{0.95}Co_{0.03}Mn_{0.02}(OH)_2$, average particle diameter ($D_{50}$): 3.5 $\mu$m] and LiOH were mixed such that a molar ratio of (Ni+Co+Mn) :Li was 1:1.00, and primarily sintered at 650°C for 3 hours in an oxygen atmosphere to prepare a primary sintered product, and then the primary sintered product was ground.

Thereafter, the primary sintered product and LiOH were mixed such that a molar ratio of (Ni+Co+Mn) :total Li was 1:1.05, and secondarily sintered at 690°C for 4 hours in an oxygen atmosphere to prepare a lithium composite transition metal oxide (secondary sintered product) being in a form of a secondary particle and having a composition represented by $LiNi_{0.95}Co_{0.03}Mn_{0.02}O_2$.

The lithium composite transition metal oxide and $Co(OH)_2$ in the form of powder (Huayou Cobalt Co., Ltd.) were added to a reactor such that a molar ratio of the lithium composite transition metal oxide to $Co(OH)_2$ was 98:2, and $Al(OH)_3$ was added in an amount of 500 ppm based on a total weight of the lithium composite transition metal oxide and then dry-mixed using an acoustic mixer to prepare a mixture. The mixture was sintered at 700°C for 3 hours to obtain a sintered product in a cake state, and the sintered product was ground to prepare a sintered product in a form of powder.

The sintered product and $B(OH)_3$ were dry-mixed such that a molar ratio of the sintered product to $B(OH)_3$ was 99.5:0.5, and then heat-treated at 330°C for 5 hours to obtain a positive electrode active material in a cake state, and the positive electrode active material was ground to prepare a positive electrode active material in a form of powder. The positive electrode active material had a coating portion including cobalt and boron formed on the lithium composite transition metal oxide, and had an average particle diameter ($D_{50}$) of 3.8 μm.

**Comparative Example 5**

A positive electrode active material was prepared in the same manner as in Example 1 except that the lithium composite transition metal oxide (secondary sintered product) prepared in Preparation Example 1 and $B(OH)_3$ were dry-mixed such that a molar ratio of the lithium composite transition metal oxide to $B(OH)_3$ was 99.5:0.5, and then heat-treated at 330°C for 5 hours to obtain a positive electrode active material in a cake state, and the positive electrode active material was ground to prepare the positive electrode active material in a form of powder.

[Table 1]

| Category | Mixing ratio (molar ratio) | |
|---|---|---|
| | Sintered product (lithium composite transition metal oxide + coating portion including cobalt) | $B(OH)_3$ |
| Example 1 | 99.75 | 0.25 |
| Example 2 | 99.5 | 0.5 |
| Example 3 | 99.0 | 1.0 |
| Comparative Example 1 | 100 | 0 |
| Comparative Example 2 | 99.9 | 0.1 |
| Comparative Example 3 | 98.5 | 1.5 |
| Comparative Example 4 | 99.5 | 0.5 |
| Comparative Example 5 | 99.5(not including cobalt coating portion) | 0.5 |

## Experimental Examples

### Experimental Example 1: Coating Layer Analysis

### EPMA Image Analysis

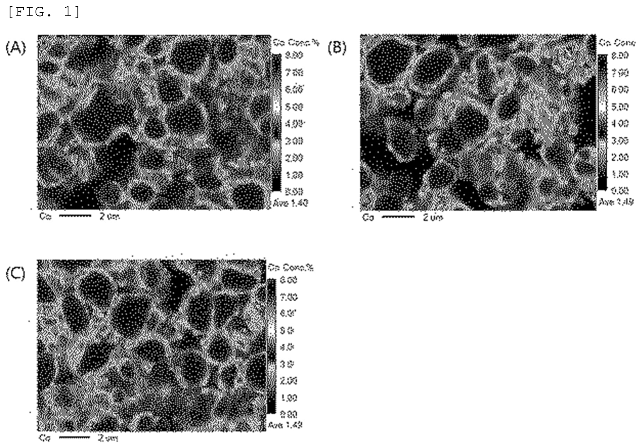

Electron probe microanalyzer (EPMA) cross-sectional analysis was performed to confirm surface coating characteristics of the positive electrode active materials prepared in Examples. First, each of the positive electrode active materials prepared in Examples 1 to 3, a carbon black conductive agent, and a PVDF binder were mixed in a weight ratio of 95:2:3 in an N-methylpyrrolidone (NMP) solvent to prepare a positive electrode slurry. One surface of an aluminum current collector was coated with the prepared positive electrode slurry, dried at 130°C, and then rolled to have an electrode porosity of 20% to manufacture a positive electrode. To create a flat surface for the EPMA cross-sectional analysis, the positive electrode was Ar-ion milled at an accelerating voltage of 5.5 kV using a HITACHI IM-5000 device to obtain a cross section of a positive electrode sample, and cross-sectional images of the positive electrode sample were observed at an accelerating voltage of 15 kV and a probe current of 50 nA using a JEOL JXA-iHP200F instrument and shown in FIG. 1.

FIG. 1(A) is the EPMA analysis image of the positive electrode active material prepared in Example 1. FIG. 1(B) is the EPMA analysis image of the positive electrode active material prepared in Example 2. FIG. 1(C) is the EPMA analysis image of the positive electrode active material prepared in Example 3.

In FIG. 1, a green portion is a portion where the coating layer including Co is present. Referring to FIG.1, it was confirmed that the green portion was continuously present, and it was confirmed that the second coating portion in the form of a continuously formed coating layer on the lithium composite transition metal oxide was present.

**SEM Image Analysis 1**

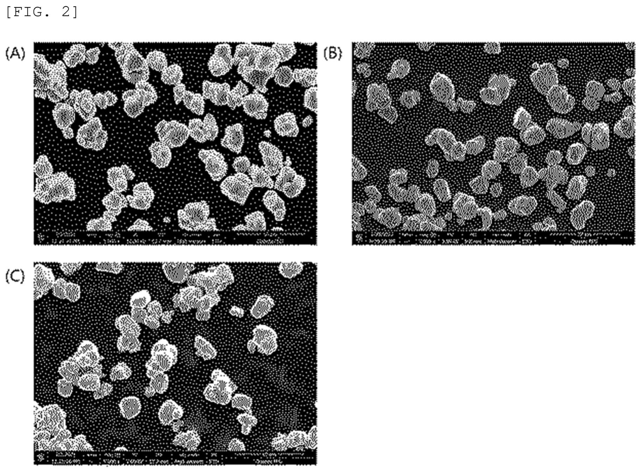

A scanning electron microscope (SEM) image of each of the positive electrode active materials prepared in Examples and Comparative Examples was obtained using a scanning electron microscope (JEOL Ltd., JSM-7610F), and the SEM images are shown in FIG. 2.

FIG. 2(A) is the SEM of the positive electrode active material prepared in Example 1. FIG. 2(B) is the SEM image of the positive electrode active material prepared in Example 2. FIG. 2 (C) is the SEM image of the positive electrode active material prepared in Example 3.

Referring to FIG. 2, it was confirmed that the positive electrode active materials prepared in Examples were each in the form of a single particle.

In FIG. 2, an uneven portion, that is, irregularities, is a portion where the first coating portion is present. Referring to FIG. 2, it was confirmed that the first coating portion in the form of a discontinuously formed island was present.

**Experimental Example 2: TOF-SIM Analysis**

Surface analysis of each of the positive electrode active materials prepared in Examples and Comparative Examples was performed using TOF-SIMS (IonTOF (Germany), TOF-SIMS 5-100) to confirm types of Co-B solid solutions included in the coating portions in the positive electrode active materials. The images are shown in FIGS. 1 and 2, and amounts (mol%) of boron (B) among total metals excluding lithium in the positive electrode active materials are shown in Table 3.

Specifically, the surface analysis of the positive electrode active materials was conducted using a secondary ion mass spectrometry (SIMS) technique, and conditions under which the analysis was performed are shown in Table 2 below.

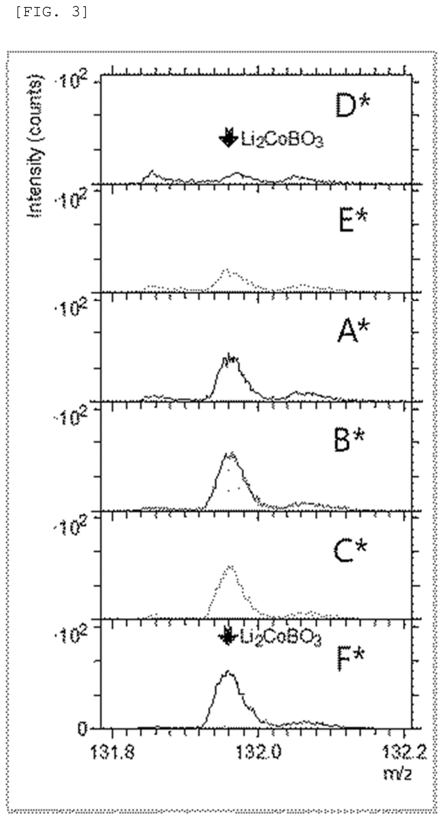

FIG. 3 is $Li_2CoBO_3$ peak-related data in a surface analysis result for each of the positive electrode active materials prepared in Examples and Comparative Examples. Specifically, A* represents data for Example 1, B* represents data for Example 2, C* represents data for Example 3, D* represents data for Comparative Example 1, E* represents data for Comparative Example 2, and F* represents data for Comparative Example 3.

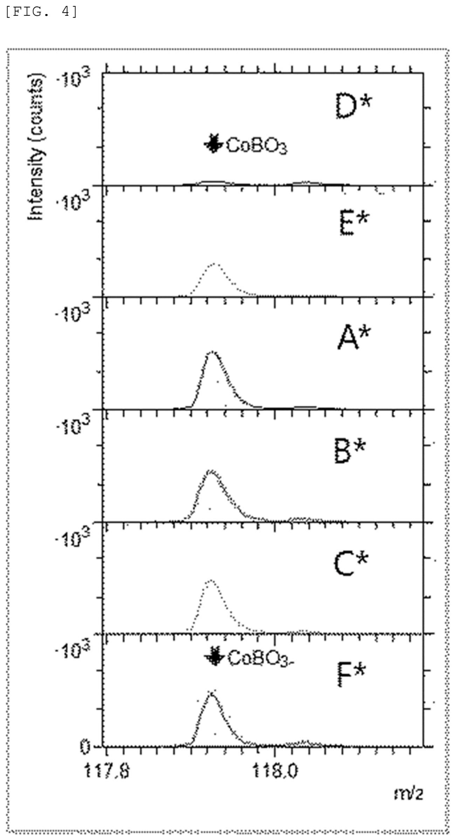

FIG. 4 is $CoBO_3$ peak-related data in a surface analysis result for each of positive electrode active materials prepared in Examples and Comparative Examples. Specifically, A* represents data for Example 1, B* represents data for Example 2, C* represents data for Example 3, D* represents data for Comparative Example 1, E* represents data for Comparative Example 2, and F* represents data for Comparative Example 3.

[Table 2]

|  | Spectra acquisition condition | 2D ion mapping (imaging) condition |
|---|---|---|
| Analysis mode | Spectrometry mode | Delayed extraction mode |
| Primary Ion | $Bi^{3+}$ | |
| Polarity | Negative & Positive | |
| Flood gun | On | On, Ar flooding |
| Cycle time | 100$\mu$s (mass range 1-880u) | 50 $\mu$s(mass range 1-214u) |
| Analysis area (pixel) | 500$\mu$mX500$\mu$m (128X128) | 500$\mu$mX500$\mu$m (512X512) |

Referring to FIGS. 1 and 2, in the positive electrode active materials prepared in Examples, the coating portions were confirmed to include $Li_2CoBO_3$ and $CoBO_3$.

**Experimental Example 3: XPS Etching Analysis**

Distribution of B in the coating portion present on the surface of each of the positive electrode active materials prepared in Examples and Comparative Examples was analyzed using electron spectroscopy for chemical analysis (ESCA) (K-Alpha, Thermo Fisher Scientific Inc.). Etching was performed at a rate of 0.3 nm/10s using an Ar ion source under depth profiling conditions to measure amounts (mol%) of boron (B) contained in the coating layers each having a thickness of 0-100 nm. The measured amounts are shown in Table 3 below.

For reference, a range below 0.1 mol% corresponds to an error range in XPS etching analysis.

[Table 3]

|  | Amount of boron (B) (mol%) |
|---|---|
| Example 1 | 0.24 |
| Example 2 | 0.49 |
| Example 3 | 0.98 |
| Comparative Example 1 | 0 |
| Comparative Example 2 | 0.08 |
| Comparative Example 3 | 1.98 |
| Comparative Example 4 | 0.47 |
| Comparative Example 5 | 0.49 |

In Table 3, the amount of the boron (B) among the total metals excluding lithium in each of the positive electrode active materials prepared in Examples was confirmed to be in a range of 0.1 mol% to 1.25 mol%.

**Experimental Example 4: SEM Image Analysis 2**

An SEM image of each of the positive electrode active materials prepared in Examples and Comparative Examples was obtained using the scanning electron microscope (JEOL Ltd., JSM-7610F), and then segmentation images were obtained utilizing a DX program (see KR 10-2022-0048191 A).

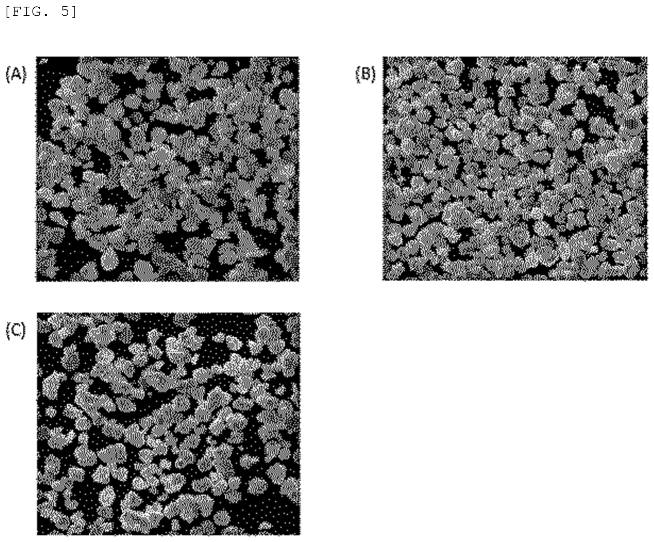

FIG. 5(A) is the segmentation image of the positive electrode active material prepared in Example 1. FIG. 5(B) is the segmentation image of the positive electrode active material prepared in Example 2. FIG. 5(C) is the segmentation image of the positive electrode active material prepared in Example 3.

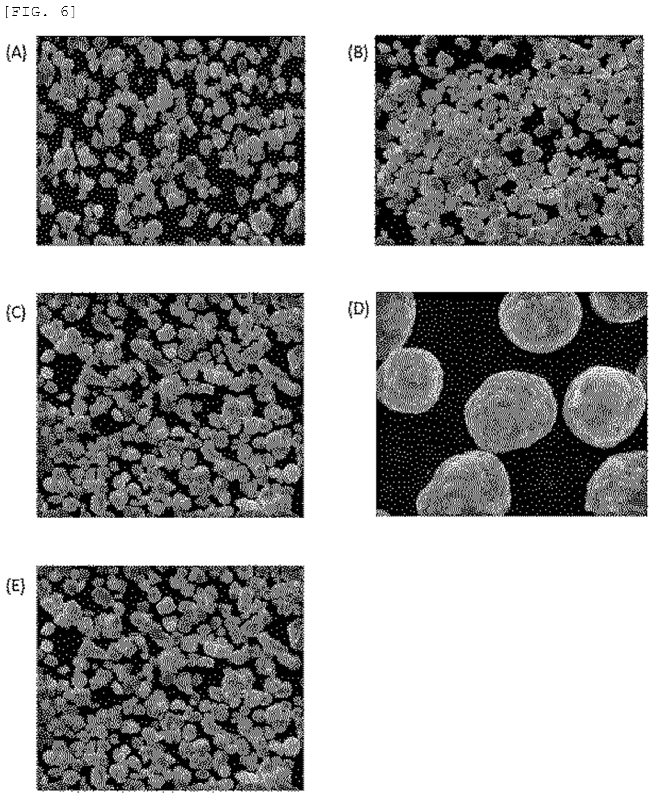

FIG. 6(A) is the segmentation image of the positive electrode active material prepared in Comparative Example 1. FIG. 6(B) is the segmentation image of the positive electrode active material prepared in Comparative Example 2. FIG. 6(C) is the segmentation image of the positive electrode active material prepared in Comparative Example 3. FIG. 6(D) is the segmentation image of the positive electrode active material prepared in Comparative Example 4. FIG. 6(E) is the segmentation image of the positive electrode active material prepared in Comparative Example 5.

Also, sphericity of the positive electrode active materials was evaluated from the segmentation images. The sphericity is a factor that may be evaluated through circularity and kurtosis. The circularity is an indicator that evaluates how round a particle is, and the kurtosis is an indicator that evaluates how gentle a curve is. As each of the circularity and the kurtosis is closer to 1, it indicates a form of an ideal circle. An area and a perimeter of each of the particles were measured, and circularity was calculated and shown in Table 4 below. A convex perimeter and a contour perimeter were measured, and the kurtosis was calculated and shown in Table 4 below.

Specifically, the circularity is a value obtained by calculating $4\pi$(particle area/particle perimeter$^2$), and a smaller difference between square of the perimeter of the particle and the area of the particle means that the particle is closer to a circle. The area of the particle may be calculated by using the number of pixels respectively corresponding to n particles present on the segmentation image, and the perimeter of the particle may be calculated by using the outermost boundaries respectively corresponding to each of n particles present on the segmentation image.

Also, the kurtosis is a value obtained by calculating the convex perimeter relative to the contour perimeter, and a smaller difference between the convex perimeter and the contour perimeter means that the particle has the contour rather smooth than uneven. The convex perimeter means a length of the outside edge of a hypothetical polygon generated by converting the SEM image to a binarized image using the DX program, and connecting vertexes of a particle recognized from the binarized image. The contour perimeter means a length of the outside edge of a particle actually recognized.

[Table 4]

| | Sphericity | |
|---|---|---|
| | Circularity | Kurtosis |
| Example 1 | 0.683 | 0.932 |
| Example 2 | 0.694 | 0.931 |
| Example 3 | 0.680 | 0.931 |
| Comparative Example 1 | 0.647 | 0.899 |
| Comparative Example 2 | 0.668 | 0.927 |
| Comparative Example 3 | 0.678 | 0.931 |
| Comparative Example 4 | 0.879 | 0.798 |
| Comparative Example 5 | 0.651 | 0.929 |

Referring to FIGS. 5 and 6, and Table 4, it was confirmed that the circularity was 0.680 or more, and the kurtosis was 0.930 or more in the positive electrode active materials prepared in Examples 1 to 3, i.e., the positive electrode active materials each of which includes the first coating portion having the discontinuous shape on the lithium composite transition metal oxide in the form of a single particle and including boron (B), and the second coating portion having a continuous shape and including the compound having the composition represented by Formula 1 or 2 set forth in this specification, and in which the amount of boron (B) among the total metals excluding lithium in the positive electrode active material is in a range of 0.1 mol% to 1.25 mol%.

In contrast, in the positive electrode active materials prepared in Comparative Examples 1 and 2, i.e., the positive electrode active materials in which the amount of boron (B) among the total metals excluding lithium in the positive electrode active material is 0 mol% or less than 0.1 mol%, it was confirmed that the circularity was less than 0.680, and the kurtosis was less than 0.930, and, in the positive electrode active material prepared in Comparative Example 3, i.e., the positive electrode active material in which the amount of boron (B) among the total metals excluding lithium in the positive electrode active material is more than 1.25 mol%, it was confirmed that the circularity was less than 0.680. And in the positive electrode active material prepared in Comparative Example 4, i.e., the lithium composite transition metal oxide in the form of a secondary particle, it was confirmed that the kurtosis was less than 0.930, and, in the positive electrode active material prepared in Comparative Example 5, i.e., the positive electrode active material in which the coating portion does not include the first coating portion and the second coating portion, it was confirmed that the circularity was less than 0.680.

Thus, the positive electrode active materials prepared in Examples were confirmed to be excellent in both circularity and kurtosis compared to the positive electrode active materials prepared in Comparative Examples, and this shows that the sphericity was improved.

**Experimental Example 5: Rolling Density Analysis**

Using an automatic pellet press (Auto Pellet Press, Carver, 3887.4), a zero point was adjusted for a circular pellet holder using a cylindrical mold.

Each of the positive electrode active materials prepared in Examples and Comparative Examples was put into the circular pellet holder, and then, a force was applied until it reached 9,000 kgf to measure a thickness of a formed pellet.

On that basis, a pellet volume was calculated, and rolling density was calculated. The results are shown in Table 5 below.

Pellet volume ($cm^3$) = $\pi$(radius of circular pellet holder)$^2$ $\times$ pellet thickness

Rolling density ($g/cm^3$) = positive electrode active material weight (g)/pellet volume ($cm^3$)

Referring to Table 5, the positive electrode active materials prepared in Examples were confirmed to have rolling densities of 3.50 $g/cm^3$ or less, and the positive electrode active materials prepared in Comparative Examples 1 and 2 were confirmed to have rolling densities of more than 3.50 $g/cm^3$.

This means that, as the coating portion includes boron, the density of the positive electrode active material is decreased. Accordingly, there is an effect of improving dispersibility of the positive electrode active material during preparation of a positive electrode slurry.

**Experimental Example 6: Viscosity Analysis of Positive Electrode Slurry**

**Preparation of Positive Electrode Slurry**

Each of the positive electrode active materials prepared in Examples and Comparative Examples, carbon black (DENKA Company Limited, FX35), and PVdF (Kureha Corporation, KF9709) and BM740H (Zeon Corporation), as a binder, were added in a weight ratio of 96.25:1.5:2.1:0.15 to a solvent (N-methylpyrrolidone (NMP)), and then stirred at 1,500 rpm for 95 minutes using a homogenizer (homogenizing disper model 2.5, Primix Corporation) to prepare a positive electrode slurry.

**Measurement of Temperature of Positive Electrode Slurry**

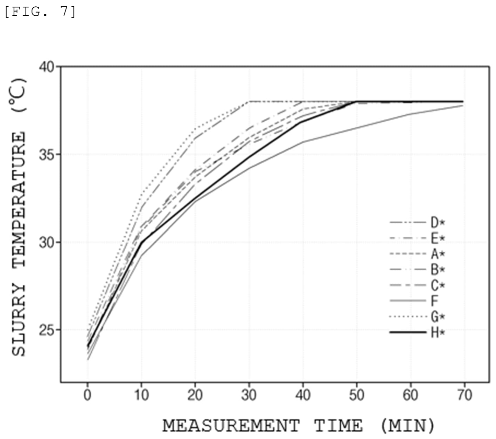

Temperatures of the positive electrode slurries were measured every 10 minutes after stirring during the preparation of the positive electrode slurries. The results are shown in FIG. 7.
FIG. 7 is a graph for temperature over measurement time of the positive electrode slurry including each of the positive electrode active materials prepared in Examples and Comparative Examples.
Referring to FIG. 7, in the positive electrode slurries including the positive electrode active materials prepared in Examples 1 to 3, the temperatures were slowly increased compared to the positive electrode slurries including the positive electrode active materials prepared in Comparative Examples. Specifically, A* represents data for Example 1, B* represents data for Example 2, C* represents data for Example 3, D* represents data for Comparative Example 1, E* represents data for Comparative Example 2, F* represents data for Comparative Example 3, G* represents data for Comparative Example 4, and H* represents data for Comparative Example 5.

**Measurement of Viscosity of Positive Electrode Slurry**

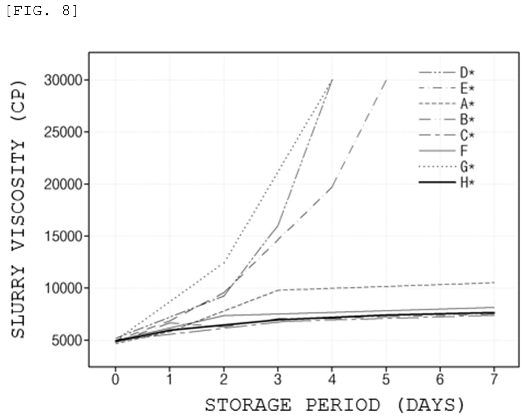

After collecting each positive electrode slurry prepared above, viscosity was measured by shearing the positive electrode slurry at 16 rpm for 1 minute using a viscosity meter (DV2T viscometer, AMETEK Brookfield). A change in viscosity over time was measured for up to 7 days after the preparation of the positive electrode slurry, and the results are shown in Table 5 below and FIG. 8.
FIG. 8 is a graph for viscosity over measurement time of the positive electrode slurry including each of the positive electrode active materials prepared in Examples and Comparative Examples.

Slurry viscosity (cP) = shear stress (g/cm · s) /shear rate (1/s)

[Table 5]

|  | Rolling density (g/cm$^3$) | Viscosity (cP) | | | | | | | |
|---|---|---|---|---|---|---|---|---|---|
|  |  | Initial | After 1 day | After 2 days | After 3 days | After 4 days | After 5 days | After 6 days | After 7 days |
| Example 1 | 3.50 | 4,730 | 5,820 | 7,850 | 9,780 | 9,920 | 10,050 | 10,230 | 10,480 |
| Example 2 | 3.47 | 4,850 | 6,670 | 6,270 | 6,990 | 7,120 | 7,230 | 7,300 | 7,460 |
| Example 3 | 3.43 | 5,130 | 5,640 | 6,200 | 6,830 | 7,050 | 7,170 | 7,220 | 7,390 |
| Comparative Example 1 | 3.55 | 5,220 | 7,160 | 9,240 | 15,930 | 30,000 | | | |
| Comparative Example 2 | 3.52 | 4,920 | 7,650 | 10,860 | 14,320 | 19,650 | 30,000 | | |
| Comparative Example 3 | 3.38 | 4,970 | 6,110 | 7,320 | 7,720 | 7,940 | 8,010 | 8,060 | 8,120 |
| Comparative Example 4 | 3.15 | 5,060 | 8,540 | 12,350 | 26,520 | 30,000 | | | |
| Comparative Example 5 | 3.49 | 4,950 | 5,980 | 6,410 | 6,950 | 7,230 | 7,460 | 7,520 | 7,610 |

Referring to Table 5 and FIG. 6, it was confirmed that, in the positive electrode slurries including the positive electrode active materials prepared in Examples 1 to 3, the initial viscosity were lower, and the viscosity increase rate was lower compared to the positive electrode slurries including the positive electrode active materials prepared in Comparative Examples 1, 2 and 4.

**Experimental Example 7: Electrochemical Property Evaluation**

One surface of an aluminum foil current collector was coated with the above-prepared positive electrode slurry dried at 130°C for 3 hours, and then rolled by a roll pressing method to prepare a positive electrode having a porosity of a positive electrode layer after rolling of 20%.

After an electrode assembly was prepared by interposing a separator between the positive electrode and a lithium metal disk negative electrode, the electrode assembly was disposed in a battery case. Then, an electrolyte solution, in which 1 M $LiPF_6$ was dissolved in an organic solvent of EC/EME/DMC (3:3:4, volume ratio), was injected into the battery case to prepare a lithium secondary battery.

The lithium secondary battery was charged at a constant current (CC) of 0.2 C to 4.25 V in a constant current/constant voltage (CC/CV) mode at 25°C (end current 0.005 C), was subsequently left standing for 20 minutes, and was then discharged at a constant current (CC) of 0.2 C to 2.5 V in a CC mode to measure charge capacity (mAh/g) and discharge capacity (mAh/g). Then, a percentage (efficiency (%)) of discharge capacity to the charge capacity was calculated and shown in Table 6 below. In addition, direct current internal resistances (DCIR) ($\Omega$) were calculated and shown in Table 6 below. The DCIR is a value calculated by dividing a difference between a voltage at 60 seconds while discharging the battery at a constant current of 0.2 C and an initial voltage by an applied current. For reference, 1 C = 200 mA/g.

The lithium secondary battery was charged at a constant current (CC) of 0.5 C to 4.25 V in a CC/CV mode at 45°C (end current 0.005 C), was subsequently left standing for 20 minutes, and was then discharged at a constant current (CC) of 0.1 C to 2.5 V in a CC mode. The above charging and discharging cycle was set to one cycle, a total of 50 cycles of the charging and discharging were repeated, and, after measuring discharge capacities (mAh/g) and direct current internal resistances (DCIR) in a first cycle and a 50th cycle, a percentage (capacity retention (%)) of the discharge capacity in the 50th cycle relative to the discharge capacity in the 1st cycle and a percentage (resistance increase rate (%)) of the direct current internal resistance in the 50th cycle relative to the direct current internal resistance (initial resistance (Q)) in the 1st cycle were calculated and shown in Table 6 below.

[Table 6]

|  | CHC (0.2C/0.2C. 25°C) | | | | CHC (0.5C/1.0C. 45°C) | | |
|---|---|---|---|---|---|---|---|
|  | Charge capacity (mAh/g) | Discharge capacity (mAh/g) | Efficiency (%) | DCIR (Q) | Capacity retention (%) | Internal resistance ($\Omega$) | Resistance increase rate (%) |
| Example 1 | 247.4 | 215.7 | 87.19 | 23.2 | 95.29 | 13.9 | 157.2 |
| Example 2 | 248.2 | 216.7 | 87.31 | 25.1 | 95.29 | 14.5 | 164.4 |
| Example 3 | 248.4 | 216.4 | 87.12 | 25.9 | 95.33 | 14.7 | 168.6 |
| Comparative Example 1 | 244.2 | 211.8 | 86.73 | 22.4 | 95.06 | 12.8 | 162.3 |
| Comparative Example 2 | 245.4 | 213.4 | 86.96 | 23.3 | 95.32 | 13.5 | 160.6 |
| Comparative Example 3 | 248.1 | 216.2 | 87.14 | 29.5 | 95.35 | 17.1 | 173.1 |
| Comparative Example 4 | 248.1 | 224.3 | 90.4 | 19.8 | 78.2 | 14.3 | 228.6 |
| Comparative Example 5 | 245.2 | 213.5 | 87.1 | 34.2 | 94.5 | 16.9 | 172.1 |

Referring to Table 6, with respect to the batteries including the positive electrode active materials prepared in Examples 1 to 3, it was confirmed that efficiencies were 87% or more, DCIRs were 26 $\Omega$ or less, capacity retentions were 95.2% or more, initial resistances were 14.7 $\Omega$ or less, and resistance increase rates were 169% or less.

In contrast, with respect to the battery including the positive electrode active material prepared in Comparative Example 1, it was confirmed that the efficiency was less than 87% and the capacity retention was less than 95.2%, with respect to the battery including the positive electrode active material prepared in Comparative Example 2, it was confirmed that the efficiency was less than 89.2%, with respect to the battery including the positive electrode active material prepared in Comparative Example 3, it was confirmed that the DCIR was more than 26 $\Omega$, the initial resistance was more than 14.7 $\Omega$, and the resistance increase rate was more than 169%, with respect to the battery including the positive electrode active material prepared in Comparative Example 4, it was confirmed that the capacity retention was less than 95.2%, and with respect to the battery including the positive electrode active material prepared in Comparative Example 5, it was confirmed that the DCIR was more than 26 $\Omega$, the capacity retention was less than 95.2%, the initial resistance was more than 14.7 $\Omega$, and the resistance increase rate was more than 169%.

In conclusion, it was confirmed that, in the positive electrode active material, which includes the coating portion including the first coating portion and the second coating portion on the lithium composite transition metal oxide in the form of a single particle, and in which the specific amount of boron is included in the positive electrode active material, when the positive electrode slurry including the positive electrode active material is prepared, the gelation was reduced, the capacity characteristics of the manufactured battery were improved, and also the resistance characteristics and the life characteristics were improved.

## Claims

1. A positive electrode active material comprising:

   a lithium composite transition metal oxide in a form of a single particle; and
   a coating portion provided on the lithium composite transition metal oxide,
   wherein the coating portion comprises a first coating portion and a second coating portion,
   wherein the first coating portion is in a form of a discontinuously formed island, and the second coating portion is in a form of a continuously formed coating layer,
   wherein the first coating portion comprises boron (B) and optionally comprises at least one coating element selected from the group consisting of cobalt (Co), aluminum (Al), barium (Ba), cerium (Ce), chromium (Cr), fluorine (F), magnesium (Mg), vanadium (V), titanium (Ti), iron (Fe), zirconium (Zr), zinc (Zn), silicon (Si), yttrium (Y), niobium (Nb), gallium (Ga), tin (Sn), molybdenum (Mo), tungsten (W), phosphorus (P), sulfur (S), strontium (Sr), tantalum (Ta), lanthanum (La), and hafnium (Hf),
   wherein the second coating portion comprises a compound having a composition represented by Formula 1 or 2 below,
   wherein an amount of boron (B) among total metals excluding lithium in the positive electrode active material is 0.1 mol% to 1.25 mol%:

   $$[\text{Formula 1}] \qquad Li_aCo_bB_cM^1_dM^2_eO_f$$

   wherein, in Formula 1,
   $M^1$ is at least one selected from the group consisting of nickel (Ni) and manganese (Mn),
   $M^2$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
   $1 \leq a \leq 2$, $1 \leq b \leq 4$, $1 \leq c \leq 2$, $0 \leq d \leq 1$, $0 \leq e \leq 1$, and $2 \leq f \leq 8$, and

   $$[\text{Formula 2}] \qquad Co_gB_hM^3_iM^4_jO_k$$

   wherein, in Formula 2,
   $M^3$ is at least one selected from the group consisting of Ni and Mn,
   $M^4$ is at least one selected from the group consisting of H, Al, Ba, Ce, Cr, F, Mg, V, Ti, Fe, Zr, Zn, Si, Y, Nb, Ga, Sn, Mo, W, P, S, Sr, Ta, and Hf, and
   $1 \leq g \leq 4$, $1 \leq h \leq 2$, $0 \leq i \leq 1$, $0 \leq j \leq 1$, and $2 \leq k \leq 8$.

2. The positive electrode active material of claim 1, wherein the first coating portion is dispersed and distributed on at least one of a surface of the lithium composite transition metal oxide or a surface of the second coating portion.

3. The positive electrode active material of claim 1, wherein the amount of boron (B) is 0.13 mol% to 1.1 mol%.

4. The positive electrode active material of claim 1, wherein an average particle diameter ($D_{50}$) is 3 $\mu$m to 20 $\mu$m.

5. The positive electrode active material of claim 1, wherein the lithium composite transition metal oxide has a composition represented by Formula 3 below:

$$[\text{Formula 3}] \qquad Li_lNi_mCo_nMn_oM^5_pO_2$$

   wherein, in Formula 3,
   $M^5$ is at least one selected from the group consisting of Al, B, Ba, Ce, Cr, F, Mg, V, Ti, Fe, Zr, Zn, Si, Y, Nb, Ga, Sn, Mo, W, P, S, Sr, Ta, La, and Hf, and
   $0.9 \leq l \leq 1.1$, $0.6 \leq m < 1$, $0 < n < 0.4$, $0 < o < 0.4$, and $0 \leq p < 0.1$.

6. The positive electrode active material of claim 1, wherein the first coating portion comprises a compound having a composition represented by Formula 4 below:

$$[\text{Formula 4}] \qquad Li_qB_rM^6_sM^7_tO_u$$

   wherein, in Formula 4,
   $M^6$ is at least one selected from the group consisting of Ni, Co, and Mn,
   $M^7$ is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and
   $0 \leq q \leq 4$, $1 \leq r \leq 4$, $0 \leq s \leq 1$, $0 \leq t \leq 1$, and $1 \leq u \leq 8$.

7. The positive electrode active material of claim 1, wherein a total area of the coating portion is 10% to 100% of a total surface area of the lithium composite transition metal oxide.

8. A method of preparing a positive electrode active material, the method comprising steps of:

   (1) mixing a lithium composite transition metal oxide in a form of a single particle with a cobalt-containing raw material and optionally mixing a coating element-containing raw material to prepare a mixture;
   (2) sintering the mixture to prepare a sintered product; and
   (3) mixing the sintered product with a boron-containing raw material, and performing a heat treatment to form a coating portion comprising cobalt (Co) and boron (B) on the lithium composite transition metal oxide,
   wherein the coating element is at least one selected from the group consisting of Al, Ba, Ce, Cr, F, Mg, V, Ti, Fe, Zr, Zn, Si, Y, Nb, Ga, Sn, Mo, W, P, S, Sr, Ta, La, and Hf, and,
   wherein the sintering is performed at a temperature of 600°C to 800°C.

9. The method of claim 8, wherein the lithium composite transition metal oxide in the form of a single particle is prepared by a method comprising steps of:

   (A) preparing a primary sintered product by mixing a composite transition metal hydroxide containing nickel, cobalt, and manganese with a first lithium-containing raw material and performing primary sintering at a temperature of 800°C to 950°C; and
   (B) preparing a secondary sintered product by mixing the primary sintered product with a second lithium-containing raw material and performing secondary sintering at a temperature of 680°C to 850°C.

10. The method of claim 8, further comprising, immediately after step (A), step (A1) of grinding the primary sintered product.

11. The method of claim 8, further comprising immediately after step (B), step (B1) of grinding the secondary sintered product.

12. A positive electrode comprising the positive electrode active material of any one of claims 1 to 7.

**13.** A lithium secondary battery comprising:

the positive electrode of claim 12;
a negative electrode;
a separator interposed between the positive electrode and the negative electrode; and
an electrolyte.

[FIG. 1]

[FIG. 2]

[FIG. 3]

[FIG. 4]

[FIG. 5]

[FIG. 6]

[FIG. 7]

[FIG. 8]

## INTERNATIONAL SEARCH REPORT

| | |
|---|---|
| | International application No. |
| | **PCT/KR2024/007566** |

| | |
|---|---|
| **A.** | **CLASSIFICATION OF SUBJECT MATTER** |

**H01M 4/36**(2006.01)i; **H01M 4/525**(2010.01)i; **H01M 4/505**(2010.01)i; **C01G 53/00**(2006.01)i; **H01M 4/131**(2010.01)i; **H01M 10/052**(2010.01)i; **H01M 4/02**(2006.01)i

According to International Patent Classification (IPC) or to both national classification and IPC

| | |
|---|---|
| **B.** | **FIELDS SEARCHED** |

Minimum documentation searched (classification system followed by classification symbols)

H01M 4/36(2006.01); C01B 35/00(2006.01); C01G 53/00(2006.01); G01N 21/71(2006.01); H01M 10/052(2010.01); H01M 4/505(2010.01); H01M 4/525(2010.01); H01M 4/62(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬이차전지(lithium secondary battery), 양극 활물질(cathode active material), 단입자(single particle), 코팅(coating), 아일랜드(island), 붕소(boron, B), 코발트(cobalt, Co), 함량(content)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | KR 10-2023-0056594 A (L & F CO., LTD.) 27 April 2023 (2023-04-27)<br>See claims 1, 2 and 12; paragraphs [0016]-[0018], [0020]-[0028], [0031], [0043]-[0045], [0054], [0055], [0059], [0063]-[0065], [0069]-[0077] and [0145]; and figure 1. | 1-7,12,13 |
| Y | | 8-11 |
| Y | WO 2023-054959 A1 (LG ENERGY SOLUTION, LTD.) 06 April 2023 (2023-04-06)<br>See paragraphs [0116]-[0120] and [0135]-[0138]. | 8-11 |
| Y | KR 10-2022-0041032 A (LG CHEM, LTD.) 31 March 2022 (2022-03-31)<br>See claims 1 and 7; and paragraphs [0067]-[0072]. | 9-11 |
| A | KR 10-2021-0112673 A (SAMSUNG SDI CO., LTD. et al.) 15 September 2021 (2021-09-15)<br>See abstract; claims 1-3, 5-9 and 12-15; and paragraph [0063]. | 1-13 |

| | |
|---|---|
| ✓ Further documents are listed in the continuation of Box C. | ✓ See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 September 2024** | **09 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## **INTERNATIONAL SEARCH REPORT**

International application No.

**PCT/KR2024/007566**

### C. DOCUMENTS CONSIDERED TO BE RELEVANT

| Category* | Citation of document, with indication, where appropriate, of the relevant passages | Relevant to claim No. |
|---|---|---|
| A | KR 10-2315939 B1 (SK INNOVATION CO., LTD.) 20 October 2021 (2021-10-20)<br>See claims 1-15. | 1-13 |
| A | KR 10-2022-0090384 A (LG CHEM, LTD.) 29 June 2022 (2022-06-29)<br>See claims 1-5 and 8-11; and paragraph [0075]. | 1-13 |

Form PCT/ISA/210 (second sheet) (July 2022)

**INTERNATIONAL SEARCH REPORT**
Information on patent family members

International application No.

**PCT/KR2024/007566**

| Patent document cited in search report | | | Publication date (day/month/year) | Patent family member(s) | | | Publication date (day/month/year) |
|---|---|---|---|---|---|---|---|
| KR | 10-2023-0056594 | A | 27 April 2023 | WO | 2023-068630 | A1 | 27 April 2023 |
| WO | 2023-054959 | A1 | 06 April 2023 | CN | 117321795 | A | 29 December 2023 |
| | | | | EP | 4325600 | A1 | 21 February 2024 |
| | | | | JP | 2024-520032 | A | 21 May 2024 |
| | | | | KR | 10-2023-0047637 | A | 10 April 2023 |
| | | | | KR | 10-2669346 | B1 | 28 May 2024 |
| KR | 10-2022-0041032 | A | 31 March 2022 | CN | 115529825 | A | 27 December 2022 |
| | | | | CN | 115529825 | B | 08 March 2024 |
| | | | | EP | 4137460 | A1 | 22 February 2023 |
| | | | | EP | 4137460 | A4 | 28 February 2024 |
| | | | | JP | 2023-521317 | A | 24 May 2023 |
| | | | | JP | 7476344 | B2 | 30 April 2024 |
| | | | | KR | 10-2498355 | B1 | 10 February 2023 |
| | | | | US | 2023-0290942 | A1 | 14 September 2023 |
| | | | | WO | 2022-065935 | A1 | 31 March 2022 |
| KR | 10-2021-0112673 | A | 15 September 2021 | CN | 113363472 | A | 07 September 2021 |
| | | | | EP | 3875434 | A1 | 08 September 2021 |
| | | | | JP | 2021-141066 | A | 16 September 2021 |
| | | | | JP | 7165769 | B2 | 04 November 2022 |
| | | | | KR | 10-2379561 | B1 | 28 March 2022 |
| | | | | US | 2021-0280866 | A1 | 09 September 2021 |
| | | | | US | 2024-0079585 | A1 | 07 March 2024 |
| KR | 10-2315939 | B1 | 20 October 2021 | CN | 113328070 | A | 31 August 2021 |
| | | | | CN | 113823778 | A | 21 December 2021 |
| | | | | EP | 3926708 | A1 | 22 December 2021 |
| | | | | EP | 3926708 | A4 | 22 December 2021 |
| | | | | KR | 10-2207997 | B1 | 25 January 2021 |
| | | | | US | 2021-0399302 | A1 | 23 December 2021 |
| | | | | US | 2022-0013781 | A1 | 13 January 2022 |
| KR | 10-2022-0090384 | A | 29 June 2022 | KR | 10-2562647 | B1 | 02 August 2023 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230071873
- KR 1020190094529 A
- KR 1020220048191 A
- KR 1020220048192 A